# DEMANDE DE BREVET EUROPEEN

(11) **EP 0 811 772 A2**
(43) Date de publication de la demande: **10.12.1997**
(21) Numéro de dépôt: 97108385.2
(22) Date de dépôt: 23.05.1997
(51) Int. Cl.: F16B 12/34

(54) **Elements qui peuvent s'assembler, en particulier profiles metalliques pour la realisation de rayonnages, structures de meubles et similaires**

(30) Priorité: 04.06.1996 IT VI960046 U
(71) Demandeur: Saugo, Corrado, 36030 Sarcedo (VI) (IT)
(72) Inventeur: Saugo, Corrado, 36030 Sarcedo (VI) (IT)
(74) Mandataire: La Ciura, Salvatore

(57) **Abrégé**

Eléments qui peuvent s'assembler pour la réalisation de rayonnages, structures de meubles et similaires caractérises par le fait de prévoir :
· profiles qui présentent une fente en correspondance d'une ou plusieurs parois ; et
· un ou plusieurs blocs coulissants entre ces profiles ;
ces blocs sont bloques en position par serrage contre la paroi de ces profiles et présentent des moyens pour le fixage des éléments structuraux complémentaires.

## Description

La présente invention propose des éléments qui peuvent s'assembler, en particulier profilés métalliques conçus pour la réalisation de rayonnages, structures de meubles ou similaires, comprenant:
- une série d'éléments portants principaux, ou montants, constitués de profilés creux qui présentent une fente longitudinale sur un ou plusieurs côtés;
- blocs ou similaires coulissants entre ces profilés et qui peuvent se bloquer dans n'importe quelle position au moyen de vis ou similaires; et
- des éléments structuraux de type étagères, supports d'étagères ou similaires, à fixer à ces blocs coulissants à l'intérieur de ces profilés.

Cette configuration permet de positionner les parties appliquées aux blocs dans n'importe quelle position par rapport aux montants pour réaliser des structures de types et de formes les plus divers.

Conformément, avec une version préférée de l'invention, les blocs peuvent être fixés aux supports d'étagères qui présentent parois latérales avec au moins un couple de trous situés sur la même partie par rapport au plan de support. Ces trous servent pour le passage des boulons ou similaires conçus pour fixer les étagères en position inversées par rapport à ces blocs coulissants dans les profilés.

Ces derniers peuvent ensuite coulisser et être bloqués par rapport aux profilés respectifs au moyen de vis ou similaires qui se vissent dans un autre couple de trous prévus dans ces blocs.

De cette façon, il est possible de fixer les étagères et les éléments structuraux dans n'importe quelle position par rapport aux montants et il est possible d'effectuer ce positionnement et le fixage relatif après que l'étagère ou l'élément structural ait été appliqué au bloc.

Le rayonnage ou le meuble peut ensuite être complété par des éléments angulaires constitués eux aussi de profilés qui présentent ailes ou parois entre lesquelles sont insérés ces montants ou profilés avec les blocs.

Il en résulte une structure qui se caractérise pour la configuration particulière des parties, apte à assurer une commodité remarquable et flexibilité d'utilisation.

L'invention s'intègre dans le secteur des éléments composés pour la réalisation de rayonnages, meubles ou similaires ainsi que les éléments complets pour structures commerciales ou publiques.

Dans ce secteur, il existe déjà de nombreuses configurations éléments composés, modulaires ou non, qui peuvent être assemblés diversement pour la réalisation de divers types de rayonnages ou meubles.

Généralement ces éléments comprennent une pluralité de montants pourvus de trous filetés, dispositifs d'accrochage de différents types pour le fixage des éléments structuraux complétifs tels que supports étagères, étagères, entretoise ou similaires.

Ces systèmes connus présentent cependant une flexibilité limitée à partir du moment où les divers composants peuvent être assemblés seulement en position prédéterminée.

Les éléments composés pouvant être seulement fixés qu'à des montants en correspondance des trous, des dispositifs d'accrochage etc.

Dans ce secteur s'intègre maintenant la présente invention, laquelle propose éléments qui peuvent s'assembler, en particulier en profilé métallique, pour réalisation de rayonnages, structures de meubles ou similaires comprenant une pluralité de montants constitués de profilés creux qui présentent une fente en correspondance à un ou plusieurs côtés et dans lesquels sont prévus éléments structuraux de complément fixés aux blocs coulissants à l'intérieur des profilés et qui peuvent se bloquer dans n'importe quelle position dans ceux-ci.

Cette configuration permet d'obtenir éléments structuraux qui se caractérisent par une remarquable flexibilité et commodité d'utilisation.

La présente invention sera maintenant décrite en détail, à titre d'exemple non limitatif, avec référence aux figures jointes dont :
· la figure 1 est une vue prospective qui montre les éléments selon l'invention en phase d'assemblage ;
· la figure 2 est une section horizontale qui montre les éléments de la figure 1 après l'assemblage ;
· la figure 3a, 4a et 5a illustrent, en vue prospective explosée, l'utilisation des éléments selon l'invention en jonction aux profilés de complément pour le montage de meubles ou similaires ;
· la figure 3b, 4b et 5b sont sections horizontales respectivement des profilés des figures 3a, 4a et 5a ;

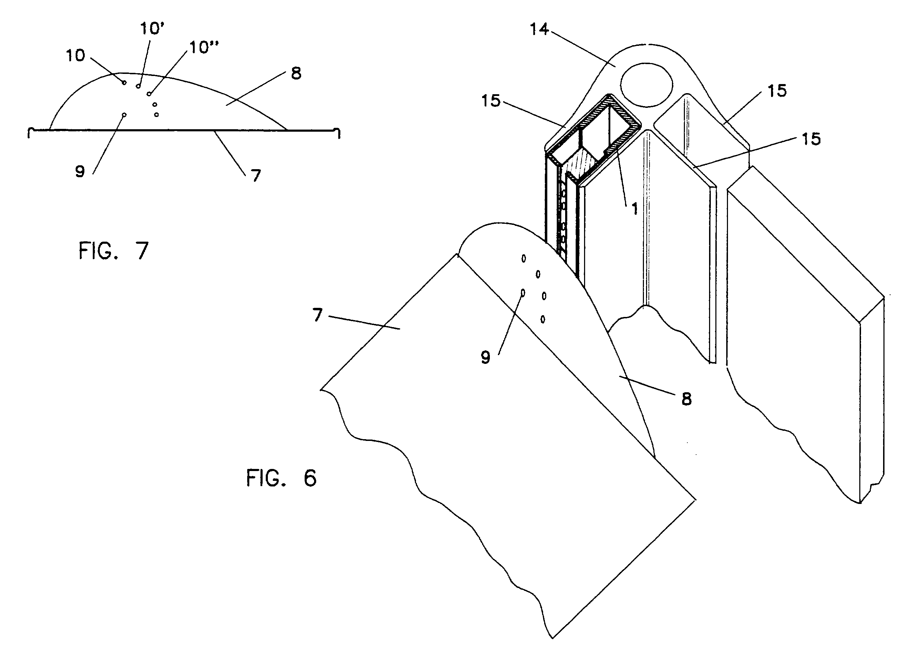

· la figure 6 montre les éléments de figure 1 en jonction à un profilé de complément pour la réalisation d'un meuble ;
· la figure 7 est la section verticale d'une étagère à appliquer à une structure réalisée avec les éléments selon l'invention ;
· la figure 8 illustre en section une particularité des éléments selon l'invention.

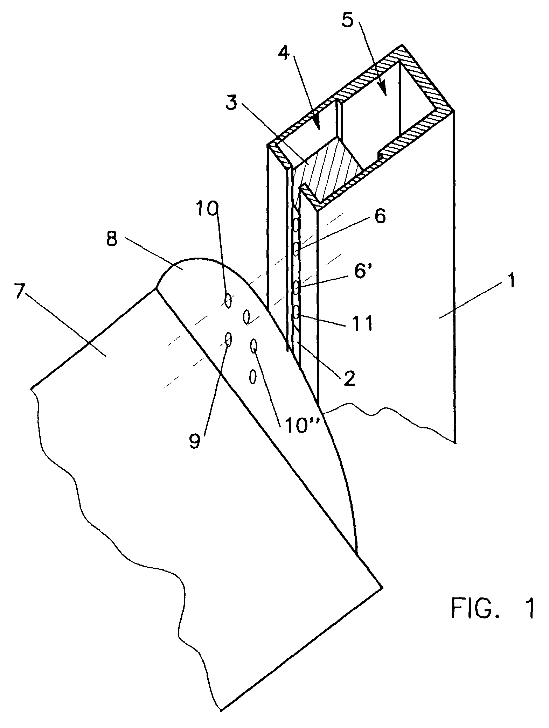

En référence à la figure 1, les éléments, selon l'invention, comprennent des profilés, indiqués par le numéro 1, qui présentent en correspondance à un côté, une fente 2 et à l'intérieur de laquelle sont insérés, de façon coulissante, blocs 3 ou similaires.

De préférence, mais non obligatoire, parois latérales des profilés 1 présentent deux couches d'épaisseur différentes, de façon à définir, dans la partie intérieure, deux canaux de diverses largeurs, indiqués respectivement par le 4 et 5.

Dans le canal 4, de largeur plus importante, les blocs 3 sont insérés alors que le canal 5, qui reste libre, peut être utilisé pour le passage de fils électriques, câbles ou similaires.

Les blocs 3 présentent au moins une couple de trous 6, 6' pour le fixage des éléments structuraux complétifs qui peuvent être constitués par d'ultérieurs profilés destinés à réaliser le châssis d'un meuble ou d'étagères ou similaires comme celles indiqués par le n°7 sur la figure 1, ou par des éléments de support pour panneaux ou plaques verticaux du type illustré dans la figure 8.

Aux extrémités de ces étagères il y a des parois verticales 8 dans lesquelles sont obtenus au moins un couple de trous 9 et 10 dans la position correspondante à celle des trous 6, 6' dans le bloc 3.

Conformément à une forme d'exécution préférée de l'invention, dans la cloison 8, seront obtenus un trou 9 et une série de trous 10, 10', 10''... disposés selon un arc ayant le centre en correspondance du centre du trou 9 et rayon égal à la distance entre les trous 6, 6' dans le bloc 3.

Cette solution permet de fixer l'étagère avec diverses inclinaisons, en faisant correspondre tout simplement, par exemple, le trou 9 au trou 6' du bloc 3 et un des trous 10, 10', ... au trou 6.

Naturellement, cela sera possible de faire correspondre le trou 9 au trou supérieur 6 dans le bloc et un des trous 10, 10'... au trou inférieur 6', permettant ainsi de monter l'étagère dans deux positions inversées, à hauteurs différentes.

La fixation pourra avoir lieu au moyen de boulons ou similaires, en les serrant, le bloc 3 sera vissé contre la paroi du profilé 1 et contre la paroi 8 de l'étagère.

Conformément avec une forme d'exécution ultérieure de la même idée de solution, les blocs pourront présenter un second couple de trous indiqués par le N. 11 de la figure 1, disposés supérieurement ou inférieurement par rapport à l'encombrement de la paroi 8 de l'étagère.

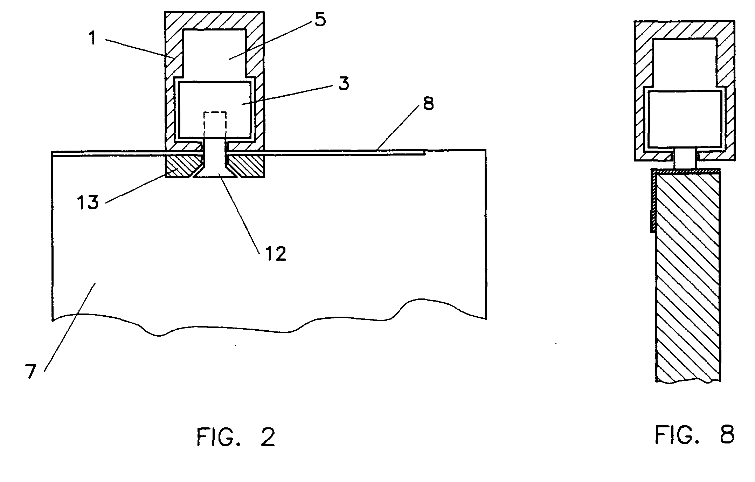

Dans ce cas, il sera possible de fixer l'étagère au bloc 3 et donc fixer le bloc 3 contre la paroi du profité au moyen de vis 12 qui s'insèrent dans les trous 11, avec interposition d'une rondelle 13 (voir figure 2).

Cette solution permettra alors d'appliquer les étagères aux blocs et donc, en dessérant les vis 12, de les faire coulisser le long des montants 1 et de les bloquer à la hauteur désirée.

Aux blocs 3 peuvent être aussi appliqués les supports constitués, par exemple, d'un profité en "L" ou similaires, auquel peuvent être fixés éléments verticaux sur ces panneaux, parois, plaques ou similaires.

La même idée de solution prévoit que le montage des blocs mobiles pouvant se positionner au choix le long du profilé, qui tenant lieu de guide, pourra trouver de nombreuses autres applications comme par exemple, pour réaliser supports pour stores, porte-manteaux ou autres, dans le but de rendre homogène toute la décoration d'un local ou d'un magasin commercial.

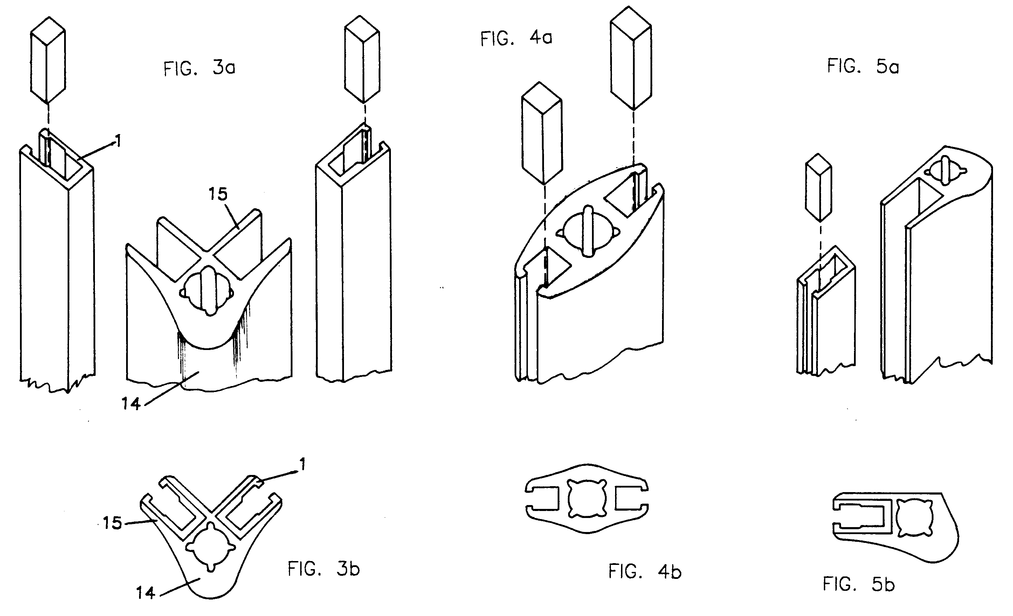

Les éléments décrits ici pourront être efficacement utilisés en assemblage aux profilés de complément dont ceux illustrés sur les figures 3 et successive, pour la réalisation de différents types de structures et meubles, éventuellement en assemblage de panneaux de complément.

Dans la figure 3 est illustré un profité d'angle, indiqué par le N. 14, qui présente couple d'ailes 15 entre lesquelles sont insérés les profilés 1.

Dans la figure 5 est illustré un profité analogue d'extrémité, alors que dans la figure 4 est montré un profité intermédiaire, capable de relier entre les deux panneaux ou deux étagères disposées consécutivement l'une à l'autre.

Comme il est clair dans la description fournie, les éléments, selon l'invention seront extrêmement pratiques et d'intérêts multiples, à partir du moment où ils permettent de réaliser différents types de meubles et structure, de façon rapide et simple.

Evidemment, les dimensions ainsi que les matériaux utilisés pourront varier en fonction des exigences d'utilisation.

## Revendications

1. Eléments qui peuvent s'assembler pour la réalisation de rayonnages, structures de meubles ou similaires caractérisés par le fait de prévoir :
· profilés qui présentent une fente en correspondance d'une ou plusieurs parois ; et
· une ou plusieurs blocs, coulissants entre ces profilés ;
ces blocs sont bloqués en position pour serrage contre la paroi de ces profilés et présentent moyens pour le fixage des éléments structuraux complémentaires.

2. Eléments structuraux qui peuvent s'assembler selon la revendication 1, caractérisés par le fait que ces blocs présentent au-moins un couple de trous pour l'application des éléments structuraux complémentaires et que ces éléments structuraux complémentaires présentent, à leurs extrémités, parois pourvues, d'une même partie par rapport au plan de l'élément, d'un couple de trous pour le passage de moyens aptes à s'insérer dans les trous des blocs pour serrer ces blocs contre la paroi de ces profilés.

3. Eléments qui peuvent s'assembler selon la revendication 2, dont ces éléments structuraux complémentaires sont constitués d'étagères.

4. Eléments qui peuvent s'assembler selon la revendication 2, dont ces éléments structuraux complémentaires sont constitués par des supports pour étagères ou plans horizontaux.

5. Eléments qui peuvent s'assembler selon la revendication 2, dont ces éléments structuraux complémentaires sont constitués par des supports pour panneaux ou plaques verticales.

6. Eléments qui peuvent s'assembler selon chacune des revendications de 2 à 4, caractérisés par le fait que ces éléments structuraux complémentaires présentant, à leur extrémité, cloisons dans lesquelles sont prévus des trous centraux et une pluralité de trous disposés le long d'un arc ayant centre dans le centre de ce premier trou et un rayon égal à la distance entre les trous présentés sur le bloc.

7. Eléments qui peuvent s'assembler selon les revendications précédentes, caractérisés par le fait de prévoir, dans ces blocs, des autres trous pour l'insertion de moyens aptes à serrer ces blocs contre la paroi du profilé, ces autres trous étant disposés supérieurement ou inférieurement par rapport à l'encombrement des éléments structuraux complémentaires appliqués à ces blocs, de façon à permettre le positionnement de ces blocs après que ces éléments structuraux complémentaires aient été montés.

8. Eléments qui peuvent s'assembler pour la réalisation de rayonnages, meubles ou similaires selon les revendications précédentes, caractérisés par le fait de prévoir profilés aptes à constituer éléments d'angle ou éléments intermédiaires du meuble, ces profilés présentant couples d'ailes aptes à accueillir ces blocs ou ces profilés contenant ces blocs.
